(19) **Europäisches Patentamt / European Patent Office / Office européen des brevets**

(11) **EP 4 783 686 A1**

(12) **EUROPEAN PATENT APPLICATION**
published in accordance with Art. 153(4) EPC

(43) Date of publication:
29.07.2026 Bulletin 2026/31

(21) Application number: 24868808.7

(22) Date of filing: 20.09.2024

(51) International Patent Classification (IPC):
H04W 56/00 (2009.01)  H04W 72/231 (2023.01)
H04W 74/00 (2009.01)  H04W 48/10 (2009.01)
H04J 11/00 (2006.01)  H04W 72/1268 (2023.01)

(52) Cooperative Patent Classification (CPC):
H04J 11/00; H04W 48/10; H04W 56/00;
H04W 72/1268; H04W 72/231; H04W 74/00

(86) International application number:
PCT/KR2024/096218

(87) International publication number:
WO 2025/063835 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.09.2023 KR 20230125766

(71) Applicant: LG Electronics Inc.
Yeongdeungpo-gu
Seoul 07336 (KR)

(72) Inventors:
• GO, Seongwon
Seoul 06772 (KR)
• KIM, Kijun
Seoul 06772 (KR)

• KO, Hyunsoo
Seoul 06772 (KR)
• KIM, Hyungtae
Seoul 06772 (KR)
• YANG, Suckchel
Seoul 06772 (KR)
• KANG, Jiwon
Seoul 06772 (KR)
• PARK, Haewook
Seoul 06772 (KR)
• KIM, Seonwook
Seoul 06772 (KR)

(74) Representative: Plasseraud IP
104 Rue de Richelieu
CS92104
75080 Paris Cedex 02 (FR)

(54) **METHOD AND DEVICE FOR UPLINK TRANSMISSION OR RECEPTION IN WIRELESS COMMUNICATION SYSTEM**

(57) A method and a device for uplink transmission or uplink reception in a wireless communication system are disclosed. The method according to one embodiment of the present disclosure may comprise steps in which a terminal: receives, from a first network node, first information related to a synchronization signal/physical broadcast channel block (SSB) of a first network node and/or a reference signal (RS) of the first network node; transmits a random access preamble to a second network node on the basis of the first information; and receives, from the second network node, a random access response (RAR) responding to the random access preamble. The RAR can include second information related to a timing advance (TA) for the second network node.

FIG.10

Receive, from first network node, first information related to SSB of first network node and/or RS of first network node — S1010

Transmit random access preamble to second network node based on first information — S1020

Receive RAR responding to random access preamble from first network node — S1030

## Description

[Technical Field]

The present disclosure relates to a wireless communication system, and in more detail, relates to a method and an apparatus for uplink transmission or uplink reception in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and an apparatus for uplink transmission of a terminal or uplink reception of a base station in a network including an uplink reception point.

An additional technical problem of the present disclosure is to provide a method and an apparatus for obtaining a timing advance for the uplink reception point of a terminal or for providing a timing advance for an uplink reception point to a terminal by a base station.

The technical objects to be achieved by the present disclosure are not limited to the above-described technical objects, and other technical objects which are not described herein will be clearly understood by those skilled in the pertinent art from the following description.

[Technical Solution]

A method according to an aspect of the present disclosure may include receiving, by a terminal from a first network node, first information related to at least one of a synchronization signal/physical broadcast channel block (SSB) of the first network node or a reference signal (RS) of the first network node; transmitting, by the terminal to a second network node, a random access preamble based on the first information; and receiving, by the terminal from the first network node, a random access response (RAR) responding to the random access preamble. The RAR may include second information related to a timing advance (TA) for the second network node.

A method according to an additional aspect of the present disclosure may include transmitting, by a first network node to a terminal, first information related to at least one of a synchronization signal/physical broadcast channel block (SSB) of the first network node or a reference signal (RS) of the first network node; and transmitting, by the first network node to the terminal, a random access response (RAR) responding to a random access preamble transmitted by the terminal to a second network node based on the first information. The RAR may include second information related to a timing advance (TA) for the second network node.

[Technical Effects]

According to the present disclosure, a method and an apparatus for uplink transmission of a terminal or uplink reception of a base station in a network including an uplink reception point may be provided.

According to the present disclosure, a method and an apparatus for obtaining a timing advance for the uplink reception point of a terminal or for providing a timing advance for an uplink reception point to a terminal by a base station may be provided.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram illustrating an uplink-downlink timing relationship in a wireless communication system to which the present disclosure can be applied.
FIG. 8 illustrates a MAC CE for random access response in a wireless communication system to which the present disclosure can be applied.
FIG. 9 illustrates a timing advance command MAC CE in a wireless communication system to which the present disclosure can be applied.
FIG. 10 is a diagram illustrating the operation of a terminal according to an embodiment of the present disclosure.
FIG. 11 is a diagram illustrating the operation of a base station according to an embodiment of the present disclosure.
FIG. 12 illustrates a block diagram of a wireless communication device according to an embodiment of the present disclosure.

[Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel

- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

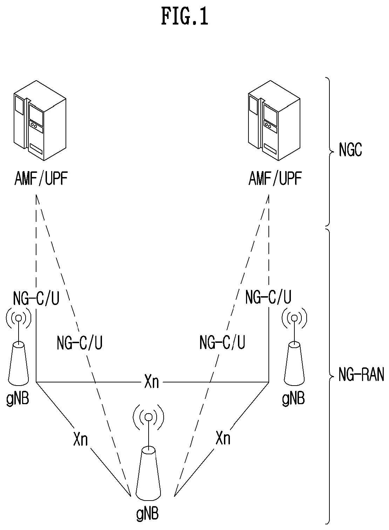

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

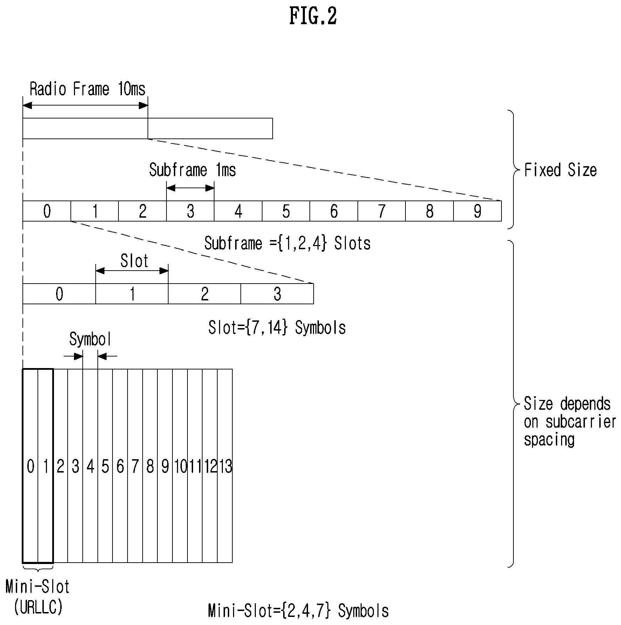

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |

(continued)

| μ | $\Delta f=2^{\mu}\cdot 15$ [kHz] | CP |
|---|---|---|
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^{\mu}\in \{0,...,N_{slo}t^{subframe,\mu}-1\}$ in a subframe and are numbered in an increasing order of $n_{s,f}^{\mu}\in \{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

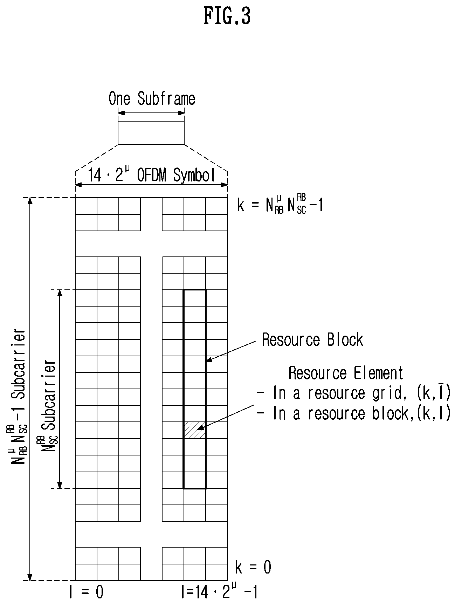

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $1'-0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

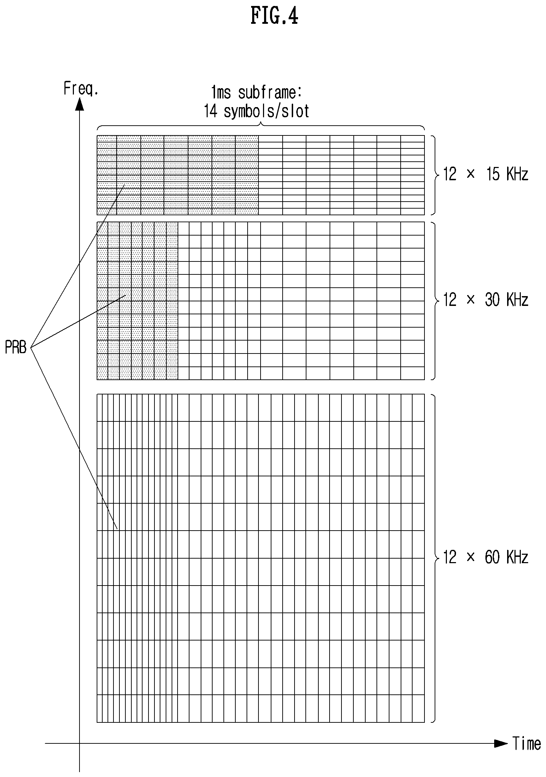

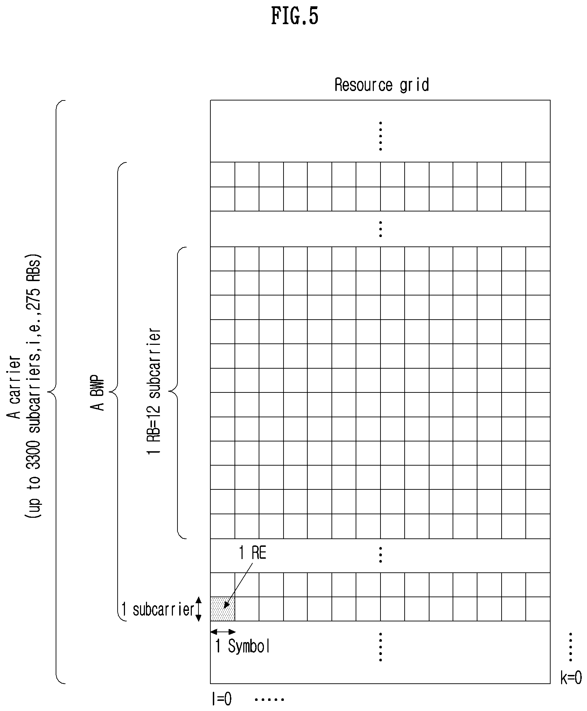

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmte, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

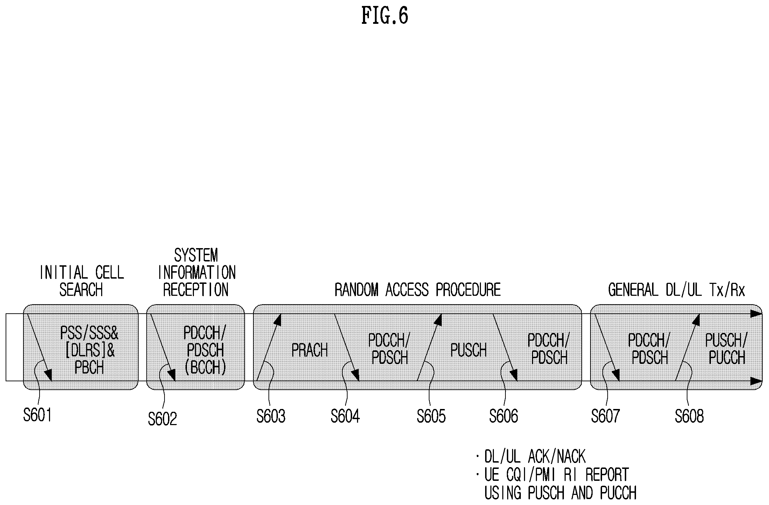

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0 0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Timing advance (TA) related operations

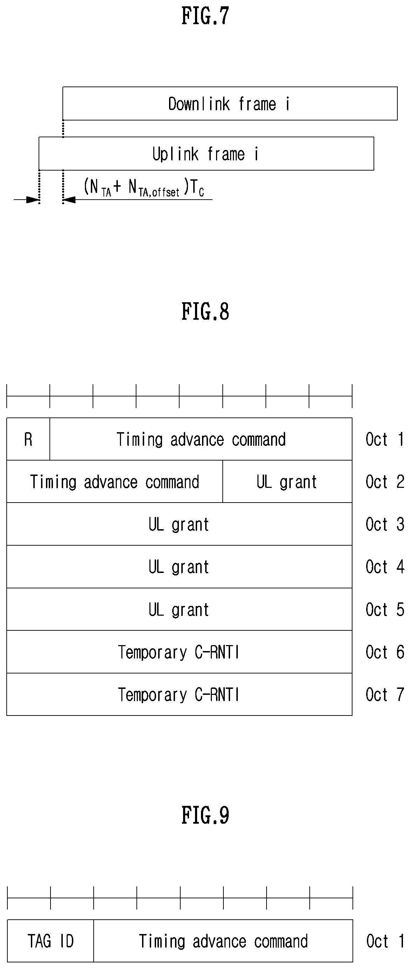

FIG. 7 is a diagram illustrating an uplink-downlink timing relationship in a wireless communication system to which the present disclosure can be applied.

An uplink frame number i for transmission from a UE starts $T_{TA}=(N_{TA}+N_{TA,offset})T_c$ before a start of a corresponding downlink frame (i.e., downlink frame i) in the UE. That is, an uplink frame starts $T_{TA}$ before a corresponding downlink frame. Here, $N_{TA,offset}$ is given in TS 38.213, except for msgA transmission on a PUCH (in this case, $N_{TA}=0$).

Hereinafter, a $N_{TA}$ configuration method will be described.

$N_{TA}$ may be configured through i) a random access response (RAR), or ii) a timing advance command MAC control element (CE).

Case 1: Configuration method through RAR

A timing advance command indicates $N_{TA}$ values with index values of $T_A$=0, 2, ..., 3846 in the case of a random access response or an absolute timing advance command MAC CE ($T_A$) for a timing advance group (TAG). Here, an amount of time alignment for a TAG with SCS of $2^\mu \cdot 15$ kHz is $N_{TA}=T_A \cdot 16 \cdot 64/2^\mu$. $N_{TA}$ is relative to SCS of the first uplink transmission from a UE after receipt of a random access response or an absolute timing advance command MAC CE.

FIG. 8 illustrates a MAC CE for random access response in a wireless communication system to which the present disclosure can be applied.

A MAC CE (hereinafter MAC RAR) for a random access response has a fixed size as shown in FIG. 8 and includes the following fields.

- R: Reserved bit, set to 0;
- Timing advance command: The Timing Advance Command field indicates an index value $T_A$ used to control an amount of timing adjustment that a MAC entity should apply. A size of the Timing Advance Command field is 12 bits.
- UL Grant: The Uplink Grant field indicates resources to be used for uplink. A size of the UL Grant field is 27 bits.
- Temporary C-RNTI (Temporary C-RNTI): The Temporary C-RNTI field is a temporary identifier used by a MAC entity during random access. A size of the Temporary C-RNTI field is 16 bits.

Case 2: Configuration method through timing advance command (MAC-CE)

A timing advance command ($T_A$) for a TAG indicates an adjustment of the current $N_{TA}$ value (i.e., $N_{TA\_old}$) to a new NTA value (i.e., $N_{TA\_new}$) with index values of TA=0,1,2,...,63. Here, in the case of SCS of $2^\mu \cdot 15$ kHz, $N_{TA\_new}=N_{TA\_old}+(T_A-31)\cdot 16 \cdot 64/2^\mu$.

FIG. 9 illustrates a timing advance command MAC CE in a wireless communication system to which the present disclosure can be applied.

A timing advance command MAC CE is identified by a MAC subheader having a logical channel identifier (LCID). A timing advance command MAC CE has a fixed size and composed of 1 octet as follows.

- TAG ID (TAG Identity): This field indicates a TAH identifier of an addressed TAG. A TAG containing SpCell has TAG identifier 0. A length of this field is 2 bits.
- Timing advance command: This field indicates an index value $T_A$ used to control an amount of timing adjustment that a MAC entity should apply. A length of the timing advance command field is 6 bits.

The present disclosure primarily illustrates and describes a 4-step random access procedure (i.e., the RACH procedure), however a 2-step random access procedure is not excluded, therefore the present disclosure can be equally applied to the 2-step random access procedure.

Hereinafter, a method for configuring $N_{TA,offset}$ will be described.

Case 1: Method for configuring a specific value for each serving cell

An information element (IE) for serving cell common configuration (e.g., ServingCellConfigCommon) is used to configure cell-specific parameters of a serving cell of a UE. When a UE accesses a cell from an idle state, the corresponding IE includes parameters that can generally be obtained from an SSB, a master information block (MIB), or SIBs. With this IE, a network provides a UE with information in dedicated signaling when configuring secondary cells (SCells) or additional secondary cell groups (SCGs). Additionally, a network provides a UE with special cells (SpCell) (master cell group (MCG) and SCG) when re-establishing synchronization.

Table 6 illustrates ServingCellConfigCommon IE.

【Table 6】

```
ServingCellConfigCommon ::=            SEQUENCE {
    physCellId                      PhysCellId
     OPTIONAL,    -- Cond HOAndServCellAdd,
    downlinkConfigCommon                DownlinkConfigCommon
     OPTIONAL,    -- Cond HOAndServCellAdd
    uplinkConfigCommon                  UplinkConfigCommon
     OPTIONAL,    -- Need M
    supplementaryUplinkConfig           UplinkConfigCommon
     OPTIONAL,    -- Need S
    n-TimingAdvanceOffset               ENUMERATED { n0, n25600, n39936 }
     OPTIONAL,    -- Need S
    ssb-PositionsInBurst                CHOICE {
        shortBitmap                     BIT STRING (SIZE (4)),
        mediumBitmap                    BIT STRING (SIZE (8)),
        longBitmap                      BIT STRING (SIZE (64))
    }                                                                  OPTIONAL,
    -- Cond AbsFreqSSB
    ssb-periodicityServingCell          ENUMERATED { ms5, ms10, ms20, ms40, ms80, ms160, spare2, spare1 }
    OPTIONAL, -- Need S
    dmrs-TypeA-Position                 ENUMERATED {pos2, pos3},
```

```
lte-CRS-ToMatchAround              SetupRelease { RateMatchPatternLTE-CRS }
OPTIONAL, -- Need M
rateMatchPatternToAddModList       SEQUENCE (SIZE (1..maxNrofRateMatchPatterns)) OF RateMatchPattern
OPTIONAL, -- Need N
rateMatchPatternToReleaseList      SEQUENCE (SIZE (1..maxNrofRateMatchPatterns)) OF RateMatchPatternId
OPTIONAL, -- Need N
ssbSubcarrierSpacing               SubcarrierSpacing
OPTIONAL, -- Cond HOAndServCellWithSSB
tdd-UL-DL-ConfigurationCommon      TDD-UL-DL-ConfigCommon
OPTIONAL, -- Cond TDD
ss-PBCH-BlockPower                 INTEGER (-60..50),
...,
[[
channelAccessMode-r16              CHOICE {
    dynamic                        NULL,
    semiStatic                     SemiStaticChannelAccessConfig-r16
}                                                                                        OPTIONAL,
-- Cond SharedSpectrum
discoveryBurstWindowLength-r16         ENUMERATED {ms0dot5, ms1, ms2, ms3, ms4, ms5}
OPTIONAL, -- Need R
ssb-PositionQCL-r16                SSB-PositionQCL-Relation-r16
OPTIONAL, -- Cond SharedSpectrum
highSpeedConfig-r16                HighSpeedConfig-r16
OPTIONAL  -- Need R
]],
[[
highSpeedConfig-v1700              HighSpeedConfig-v1700
OPTIONAL, -- Need R
channelAccessMode2-r17             ENUMERATED {enabled}
OPTIONAL, -- Cond SharedSpectrum2
discoveryBurstWindowLength-r17     ENUMERATED {ms0dot125, ms0dot25, ms0dot5, ms0dot75, ms1,
ms1dot25}   OPTIONAL, -- Need R
ssb-PositionQCL-r17               SSB-PositionQCL-Relation-r17
OPTIONAL, -- Cond SharedSpectrum2
highSpeedConfigFR2-r17            HighSpeedConfigFR2-r17
OPTIONAL, -- Need R
uplinkConfigCommon-v1700          UplinkConfigCommon-v1700
OPTIONAL, -- Need R
ntn-Config-r17                    NTN-Config-r17
OPTIONAL  -- Need R
]],
[[
featurePriorities-r17             SEQUENCE {
    redCapPriority-r17            FeaturePriority-r17                                     OPTIONAL,
-- Need R
```

| slicingPriority-r17 | FeaturePriority-r17 | OPTIONAL, - |
| - Need R | | |
| msg3-Repetitions-Priority-r17 | FeaturePriority-r17 | OPTIONAL, |
| -- Need R | | |
| sdt-Priority-r17 | FeaturePriority-r17 | OPTIONAL |
| -- Need R | | |
| } | | OPTIONAL |
| -- Need R | | |
| ]] | | |
| } | | |

Referring to table 6, the n-TimingAdvanceOffset field (or parameter) indicates $N_{TA,offset}$ to be applied to all uplink transmissions on a corresponding serving cell. If this field does not exist, a UE applies a value defined for a duplex mode and frequency range (FR) of a corresponding serving cell.

Case 2: Method of applying a predefined value to a serving cell according to a duplex mode and a frequency range (FR)

Table 7 illustrates a value of $N_{TA,offset}$.

[Table 7]

| Frequency range and band of cell used for uplink transmission | $N_{TA\ offset}$ (Unit: $T_c$) |
| --- | --- |
| FR1 FDD or TDD band with neither E-UTRA-NR nor NB-IoT-NR coexistence case | 25600 (Note 1) |
| FR1 FDD band with E-UTRA-NR and/or NB-IoT-NR coexistence case | 0 (Note 1) |

(continued)

| Frequency range and band of cell used for uplink transmission | $N_{TA\ offset}$ (Unit: $T_c$) |
|---|---|
| FR1 TDD band with E-UTRA-NR and/or NB-IoT-NR coexistence case | 39936 (Note 1) |
| FR2 | 13792 |
| Note 1: | The UE identifies $N_{TA\ offset}$ based on the information n-TimingAdvanceOffset as specified in TS 38.331 [2]. If UE is not provided with the information n-TimingAdvanceOffset, the default value of $N_{TA\ offset}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{TA\ offset}$ can also be provided for a FDD serving cell. |
| Note 2: | Void |

Referring to Table 7, a value of $N_{TA,offset}$ is determined according to a frequency range (FR) and a band of a cell used for uplink transmission. In the case of neither E-UTRA-NR coexistence nor NB-IoT-NR coexistence, in an FR1 FDD or TDD band, a value of $N_{TA,offset}$ is 25600. In the case of E-UTRA-NR and/or NB-IoT-NR coexistence, in an FR1 FDD band, a value of $N_{TA,offset}$ is 0. In the case of E-UTRA-NR and/or NB-IoT-NR coexistence, in an FR1 TDD band, a value of $N_{TA,offset}$ is 39936. If FR2, a value of $N_{TA,offset}$ is 13792.

As described above, a UE identifies a value of $N_{TA,offset}$ based on the n-TimingAdvanceOffset field (or parameter) information. However, if a UE does not receive n-TimingAdvanceOffset field (or parameter) information, a default value of $N_{TA,offset}$ is configured to 25600 for an FR1 band. In the case of multiple UL carriers within the same timing advance group (TAG), a UE expects the same n-TimingAdvanceOffset value for all UL carriers, and the 39936 value of $N_{TA,offset}$ may also be provided for an FDD serving cell.

Hereinafter, a timing advance group (TAG) will be described.

For cells configured by RRC and also configured with UL, a TAG refers to a serving cell group using the same timing reference cell and the same timing advance value. A TAG including an SpCell of a MAC entity is referred to as a primary timing advance group (PTAG), while a secondary timing advance group (STAG) refers to other TAGs.

An IE (e.g., TAG-Config) for TAG configuration is used to configure parameters for a time-alignment group.

Table 8 illustrates the TAG-Config IE.

【Table 8】

| | |
|---|---|
| TAG-Config ::= | SEQUENCE { |
| tag-ToReleaseList | SEQUENCE (SIZE (1..maxNrofTAGs)) OF TAG-Id |
| OPTIONAL, -- Need N | |
| tag-ToAddModList | SEQUENCE (SIZE (1..maxNrofTAGs)) OF TAG |
| OPTIONAL -- Need N | |
| } | |
| TAG ::= | SEQUENCE { |
| tag-Id | TAG-Id, |
| timeAlignmentTimer | TimeAlignmentTimer, |
| ... | |
| } | |
| TAG-Id ::= | INTEGER (0..maxNrofTAGs-1) |

Referring to Table 8, the tag-Id field (parameter) indicates a TAG of an SpCell or an SCell. This field uniquely identifies a TAG within a scope of a cell group.

Additionally, the timeAlignmentTimer field (parameter) indicates a time alignment timer value ([ms]) for a TAG with tag-Id.

A maximum number of TAGs may be determined by the standard or by a base station, and may be, for example, 4.

An IE (e.g., MAC-CellGroupConfig) for a MAC cell group configuration is used to configure MAC parameters for a cell group, including discontinuous reception (DRX).

Table 9 illustrates part of MAC-CellGroupConfig IE.

【Table 9】

| | | |
|---|---|---|
| MAC-CellGroupConfig ::= | SEQUENCE { | |
| drx-Config | SetupRelease { DRX-Config } | OPTIONAL, |
| -- Need M | | |
| schedulingRequestConfig | SchedulingRequestConfig | |
| OPTIONAL, -- Need M | | |
| bsr-Config | BSR-Config | OPTIONAL, |
| -- Need M | | |
| tag-Config | TAG-Config | OPTIONAL, |
| -- Need M | | |
| phr-Config | SetupRelease { PHR-Config } | OPTIONAL, |
| -- Need M | | |
| skipUplinkTxDynamic | BOOLEAN, | |
| ..., | | |
| [[ | | |
| csi-Mask | BOOLEAN | |
| OPTIONAL, -- Need M | | |
| dataInactivityTimer | SetupRelease { DataInactivityTimer } | OPTIONAL |
| -- Cond MCG-Only | | |
| ]], | | |

```
[[
usePreBSR-r16                    ENUMERATED {true}
OPTIONAL,    -- Need R
schedulingRequestID-LBT-SCell-r16    SchedulingRequestId
OPTIONAL,    -- Need R
lch-BasedPrioritization-r16         ENUMERATED {enabled}
OPTIONAL,    -- Need R
schedulingRequestID-BFR-SCell-r16    SchedulingRequestId
OPTIONAL,    -- Necd R
drx-ConfigSecondaryGroup-r16        SetupRelease { DRX-ConfigSecondaryGroup-r16 }
OPTIONAL    -- Need M
]],
[[
enhancedSkipUplinkTxDynamic-r16      ENUMERATED {true}
OPTIONAL,    -- Need R
enhancedSkipUplinkTxConfigured-r16   ENUMERATED {true}
OPTIONAL    -- Need R
]],
[[
intraCG-Prioritization-r17          ENUMERATED {enabled}              OPTIONAL,     -- Cond
LCH-PrioWithReTxTimer
drx-ConfigSL-r17                    SetupRelease { DRX-ConfigSL-r17 }     OPTIONAL,     -- Need M
drx-ConfigExt-v1700                 SetupRelease { DRX-ConfigExt-v1700 }  OPTIONAL,     -- Need M
schedulingRequestID-BFR-r17          SchedulingRequestId               OPTIONAL,     -- Need R
schedulingRequestID-BFR2-r17         SchedulingRequestId               OPTIONAL,     -- Need R
schedulingRequestConfig-v1700        SchedulingRequestConfig-v1700     OPTIONAL,     -- Need M
tar-Config-r17                      SetupRelease { TAR-Config-r17   }                 OPTIONAL,
-- Need M
g-RNTI-ConfigToAddModList-r17       SEQUENCE (SIZE (1..maxG-RNTI-r17)) OF MBS-RNTI-SpecificConfig-
r17       OPTIONAL,     -- Need N
g-RNTI-ConfigToReleaseList-r17      SEQUENCE (SIZE (1..maxG-RNTI-r17)) OF MBS-RNTI-SpecificConfigId-
r17       OPTIONAL,     -- Need N
g-CS-RNTI-ConfigToAddModList-r17    SEQUENCE (SIZE (1..maxG-CS-RNTI-r17)) OF MBS-RNTI-
SpecificConfig-r17    OPTIONAL,     -- Need N
g-CS-RNTI-ConfigToReleaseList-r17   SEQUENCE (SIZE (1..maxG-CS-RNTI-r17)) OF MBS-RNTI-
SpecificConfigId-r17 OPTIONAL,     -- Need N
allowCSI-SRS-Tx-MulticastDRX-Active-r17    BOOLEAN
OPTIONAL    -- Need M
]],
[[
schedulingRequestID-PosMG-Request-r17 SchedulingRequestId
OPTIONAL,    -- Need R
drx-LastTransmissionUL-r17          ENUMERATED {enabled}
OPTIONAL    -- Need R
]]
}
```

Referring to Table 9, the TAG-Config IE can be configured through the tag-Config field in the MAC-CellGroup-Config IE.

An IE (e.g., CellGroupConfig) for configuring a cell group is used to configure a master cell group (MCG) or a secondary cell group (SCG). A cell group is associated with one MAC entity, Radio Link Control (RLC) entities and includes a set of logical channels of a primary cell (SpCell) and one or more secondary cells (SCells).

Table 10 illustrates part of CellGroupConfig IE.

【Table 10】

| | |
|---|---|
| CellGroupConfig ::= | SEQUENCE { |
| cellGroupId | CellGroupId, |
| rlc-BearerToAddModList | SEQUENCE (SIZE(1..maxLC-ID)) OF RLC-BearerConfig |
| OPTIONAL, -- Need N | |
| rlc-BearerToReleaseList | SEQUENCE (SIZE(1..maxLC-ID)) OF LogicalChannelIdentity |
| OPTIONAL, -- Need N | |
| mac-CellGroupConfig | MAC-CellGroupConfig |
| OPTIONAL, -- Need M | |
| physicalCellGroupConfig | PhysicalCellGroupConfig |
| OPTIONAL, -- Need M | |
| spCellConfig | SpCellConfig |
| OPTIONAL, -- Need M | |
| sCellToAddModList | SEQUENCE (SIZE (1..maxNrofSCells)) OF SCellConfig |
| OPTIONAL, -- Need N | |
| sCellToReleaseList | SEQUENCE (SIZE (1..maxNrofSCells)) OF SCellIndex |
| OPTIONAL, -- Need N | |
| ..., | |

Referring to Table 10, the MAC-CellGroupConfig IE can be confiugred through the mac-CellGroupConfig field in CellGroupConfig IE.

A maximum number of secondary cell groups may be determined by the standard or by a base station, and may be, for example, 3.

Table 11 illustrates the operation of an MAC entity for maintaining uplink time alignment.

[Table 11]

| |
|---|
| 5.2 Maintenance of Uplink Time Alignment |
| RRC configures the following parameters for the maintenance of UL time alignment: |
| RRC configures the following parameters for the maintenance of UL time alignment: |
| - timeAlignmentTimer (per TAG) which controls how long the MAC entity considers the Serving Cells belonging to the associated TAG to be uplink time aligned. |
| The MAC entity shall: |
| 1> when a Timing Advance Command MAC CE is received, and if an $N_{TA}$ has been maintained with the indicated TAG: |
| 2> apply the Timing Advance Command for the indicated TAG; |
| 2> start or restart the timeAlignmentTimer associated with the indicated TAG. |
| 1> when a Timing Advance Command is received in a Random Access Response message for a Serving Cell belonging to a TAG or in a MSGB for an SpCell: |
| 2> if the Random Access Preamble was not selected by the MAC entity among the contention-based Random Access Preamble: |
| 3> apply the Timing Advance Command for this TAG; |
| 3> start or restart the timeAlignmentTimer associated with this TAG. |

(continued)

> 2> else if the timeAlignmentTimer associated with this TAG is not running:
>
> 3> apply the Timing Advance Command for this TAG;
>
> 3> start the timeAlignmentTimer associated with this TAG;
>
> 3> when the Contention Resolution is considered not successful; or
>
> 3> when the Contention Resolution is considered successful for SI request, after transmitting HARQ feedback for MAC PDU including UE Contention Resolution Identity MAC CE:
>
> 4> stop timeAlignmentTimer associated with this TAG.
>
> 2> else:
>
> 3> ignore the received Timing Advance Command.
>
> 1> when an Absolute Timing Advance Command is received in response to a MSGA transmission including C-RNTI
>
> MAC CE:
>
> 2> apply the Timing Advance Command for PTAG;
>
> 2> start or restart the timeAlignmentTimer associated with PTAG.
>
> 1> when a timeAlignmentTimer expires:
>
> 2> if the timeAlignmentTimer is associated with the PTAG:
>
> 3> flush all HARQ buffers for all Serving Cells;
>
> 3> notify RRC to release PUCCH for all Serving Cells, if configured;
>
> 3> notify RRC to release SRS for all Serving Cells, if configured;
>
> 3> clear any configured downlink assignments and configured uplink grants;
>
> 3> clear any PUSCH resource for semi-persistent CSI reporting;
>
> 3> consider all running timeAlignmentTimers as expired;
>
> 3> maintain $N_{TA}$ of all TAGs.
>
> 2> else if the timeAlignmentTimer is associated with an STAG, then for all Serving Cells belonging to this TAG:
>
> 3> flush all HARQ buffers;
>
> 3> notify RRC to release PUCCH, if configured;
>
> 3> notify RRC to release SRS, if configured;
>
> 3> clear any configured downlink assignments and configured uplink grants;
>
> 3> clear any PUSCH resource for semi-persistent CSI reporting;
>
> 3> maintain $N_{TA}$ of this TAG.
>
> When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the timeAlignmentTimer associated with the SCell as expired.
>
> The MAC entity shall not perform any uplink transmission on a Serving Cell except the Random Access Preamble and MSGA transmission when the timeAlignmentTimer associated with the TAG to which this Serving Cell belongs is not running. Furthermore, when the timeAlignmentTimer associated with the PTAG is not running, the MAC entity shall not perform any uplink transmission on any Serving Cell except the Random Access Preamble and MSGA transmission on the SpCell.

### Uplink Transmission for Uplink Reception Points

In the existing wireless communication system, operations for a terminal's uplink transmission and downlink reception and a base station's uplink reception and downlink transmission based on a multi-TRP (M-TRP) are defined. These M-TRP operations may include a single-DCI (S-DCI)-based M-TRP operation in which one specific TRP transmits a control signal to a terminal and a multi-DCI (M-DCI)-based M-TRP operation in which all of a plurality of TRPs transmit a control signal to a terminal. In a refined wireless communication system, at least one uplink reception point (or an uplink reception-only point, hereinafter referred to as a UL Rx point) which is additionally arranged in a macro cell is being discussed to compensate for the uplink coverage of a terminal.

To reduce a base station installation cost, this UL Rx point may be implemented to perform only UL reception without a DL transmission chain. In this case, since a UL Rx point may not transmit a DL reference signal (RS), a terminal may not know a DL slot boundary (or reference point) for TA application to a UL Rx point. In addition, since a UL Rx point does not transmit an SSB, the existing SSB-based RACH procedure may also not be applied as it is to an RACH procedure for obtaining a TA related to the timing of a terminal's UL transmission to a UL Rx point. In addition, in the existing wireless communication system, a pathloss reference RS (hereinafter, a PL-RS) is configured as an open-loop parameter for UL power control, but DL transmission is not performed at a UL Rx point, so a DL RS to be used as a PL-RS may not be configured for a terminal. Furthermore, even when a terminal has a capability for beam correspondence, for a UL Rx point which does not transmit a DL RS, a DL RS may not be configured as a reference RS for a terminal's UL transmission beam, so there is a problem that it is necessary to find an optimal UL transmission beam for a UL Rx point through a terminal's UL beam management operation.

Hereinafter, various examples of the present disclosure are described regarding for a method in which a base station schedules uplink transmission to a terminal and a method in which a terminal obtains and applies a TA when a terminal performs uplink transmission to a multi-Rx point (e.g., a macro cell and/or a UL Rx point) in specific CC/BWP(s).

In the present disclosure, when information/a value is defined, it may mean that a base station and a terminal know corresponding information/value in advance without signaling/an indication between a base station and a terminal for corresponding information. In the present disclosure, when information/a value is configured to a terminal, it may mean that a base station provides corresponding information/value to a terminal through higher layer (e.g., L3) signaling. In the present disclosure, when information/a value is indicated to a terminal, it may mean that a base station provides corresponding information/value to a terminal through L2/L1 signaling such as an MAC CE, DCI, etc.

In addition, the scope of the present disclosure is not limited by terms called a macro cell and a UL Rx point in the following description. For example, in the present disclosure, a macro cell may be used as a term representing a base station or a cell that supports both DL and UL transmission/reception, and a UL Rx point (or an Rx-only point or a UL TRP) may be used as a term representing a base station or a cell that supports only UL reception. For example, a UL Rx point may correspond to a radio remote head (RRH), or functionally, a macro cell may correspond to a central unit (CU) and a distributed unit (DU) or a DU and a UL Rx point may correspond to a radio unit (RU). In addition, it may be assumed that there is almost no delay in information exchange between a macro cell and a UL Rx point because they are connected through an ideal backhaul.

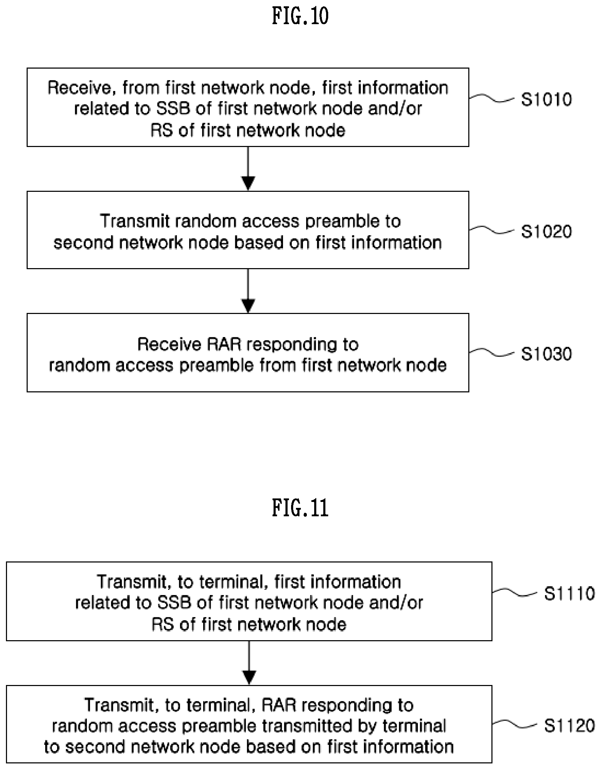

FIG. 10 is a diagram illustrating the operation of a terminal according to an embodiment of the present disclosure.

In S1010, a terminal may receive the first information related to the SSB of the first network node and/or the RS of the first network node from the first network node.

In S1020, a terminal may transmit a random access preamble to the second network node based on the first information.

A downlink reference timing or pathloss offset for random access preamble transmission may be determined by the terminal based on at least one of the SSB or RS of the first information. For example, the transmission beam and/or PL-RS of a random access preamble (or a PRACH) may be determined based on the SSB/RS of the first information.

This first information may be included in a PDCCH order from the first network node to a terminal. Alternatively, the first information may be provided in advance to a terminal from the first network node through uplink signaling or an MAC CE before a terminal receives a PDCCH order related to a random access procedure.

For example, the first network node may correspond to a macro cell or a TRP (i.e., a network node that supports both DL transmission and UL reception), and the second network node may correspond to a UL Rx point (i.e., a network node that supports UL reception without supporting DL transmission).

In S1030, a terminal may receive a random access response (RAR) responding to a random access preamble from the first network node.

An RAR may include the second information related to a timing advance (TA) for the second network node.

A quasi co-location (QCL) assumption for a PDSCH carrying an RAR and/or a PDCCH scheduling a corresponding PDSCH may be based on the SSB of the first information provided by the first network. Alternatively, a QCL assumption for a PDSCH carrying an RAR and/or a PDCCH scheduling a corresponding PDSCH may be based on the RS of the first information and/or based on QCL information configured for a control resource set (CORESET) related to a type-1 common search space (CSS) for the first network node.

A random access-RNTI (RA-RNTI) related to the monitoring of a PDCCH scheduling a PDSCH carrying an RAR (or DCI including scheduling information for a corresponding PDSCH) may be calculated based on at least one of the symbol index, slot index or frequency domain index of a PRACH occasion or an RACH occasion (RO) based on the SSB of the first information.

Additionally or alternatively, after obtaining a TA for the second network node, a terminal may expect that a DL reference point for the first network node is the same as a reference point (or a radio frame boundary) for applying a corresponding TA value; or define/configure/indicate a difference value (or an offset) between the reference point of the second network node and the DL reference point of the first network node to a terminal; or define/configure/indicate the value of an $N\_TA\_offset$ parameter separately for the second network node (i.e., in addition to the value of a corresponding parameter for the first network node).

Additionally or alternatively, SRS resource set(s)/SRS resource(s) for the second network node may be configured separately (e.g., in addition to SRS resource set(s)/SRS resource(s) for the first network node). Based on this, for TA modification for the second network node, a TA command (TAC) corresponding to an absolute value or a TAC corresponding to a relative value may be indicated to a terminal through an MAC CE.

After obtaining a TA for the second network node in this way, a terminal may perform uplink transmission to the second network node based on an obtained TA.

A terminal's operation for obtaining a TA for the second network node described above may be performed after a configuration related to the second network node is provided to a terminal (from the first network node) (i.e., based on a corresponding configuration). For example, a configuration related to the second network node may include information related to the above-described TA configuration and/or may include a configuration related to transmission and reception operations between the first and second network nodes and a terminal (after obtaining a TA for the second network node).

For example, a distinct time resource and/or frequency resource may be allocated to the first network node and the second network node. Additionally or alternatively, a UL channel/signal resource may be configured separately for the first network node and the second network node. Additionally or alternatively, a power control parameter/a TA parameter/a beam-related parameter may be configured separately for the first network node and the second network node. Additionally or alternatively, a different CORESET pool index may be configured for the first network node and the second network node, and in this case, a terminal may perform only UL transmission for a CORESET pool index corresponding to the second network node. Additionally or alternatively, an SRS resource set may be configured separately for the first network node and the second network node. Additionally or alternatively, a joint/individual TCI state may be configured separately for the first network node and the second network node. Additionally or alternatively, for the first network node and the second network node, a HARQ process ID may be configured separately, and a power control parameter/a TA parameter/a beam-related parameter may be configured for each HARQ process ID.

For example, the first TAG related to the first network node and the second TAG related to the second network node may be configured for a terminal. In this case, the second information related to a TA included in the RAR of S1030 may be applied to the second TAG. In addition, the first TCI state for the first TAG and the second TCI state for the second TAG may be configured/indicated to a terminal. In this case, uplink transmission from a terminal to the second network node may be performed based on the second TCI state. As an additional example of the above-described examples, a pathloss offset (or a reference point) associated with the second TCI state may also be applied to random access preamble transmission for the second network node.

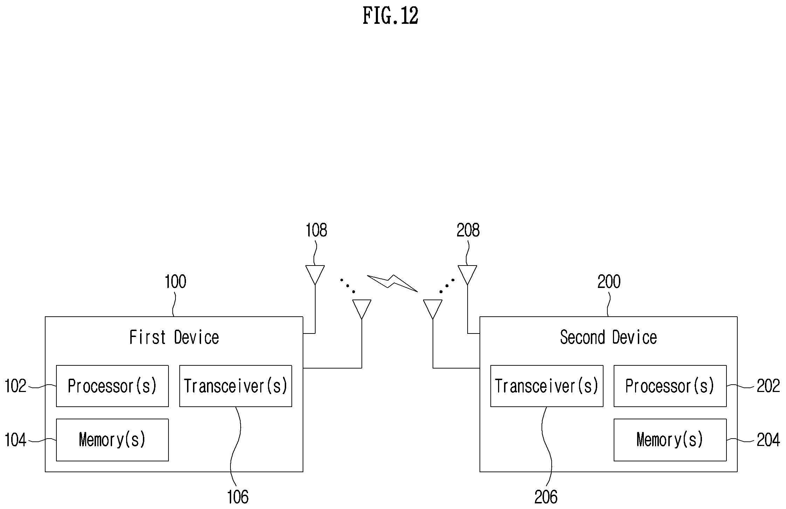

A method described in the example of FIG. 10 may be performed by the first wireless device 100 in FIG. 12. For example, at least one processor 102 of the first wireless device 100 in FIG. 12 may be configured to receive, by a terminal from the first network node, through at least one transceiver 106, the first information related to at least one of the SSB of the first network node or the RS of the first network node; transmit, by a terminal to the second network node, through at least one transceiver 106, a random access preamble based on the first information; and receive, by a terminal from the first network node, through at least one transceiver 106, an RAR responding to a random access preamble. An RAR may include the second information related to a TA for the second network node. Furthermore, at least one memory 104 of the first wireless device 100 may store instructions for performing a method described in the example of FIG. 10 or examples described below when executed by at least one processor 102.

FIG. 11 is a diagram illustrating the operation of a base station according to an embodiment of the present disclosure.

In S1110, the first network node may transmit to a terminal the first information related to the SSB of the first network node and/or the RS of the first network node.

In S1120, the first network node may transmit to a terminal an RAR responding to a random access preamble transmitted by a terminal to the second network node based on the first information.

For example, it may be assumed that a connection between the first network node and the second network node is an ideal backhaul (i.e., there is almost no delay in information exchange between the two). Accordingly, it may be assumed that the first network node may know without delay that the second network node received a random access preamble from a terminal. For example, when the second network node receives a random access preamble from a terminal, it may inform the first network node of this.

Since the specific features of the first information, the second information, a random access preamble and an RAR are the same as described by referring to the example of FIG. 10, an overlapping description is omitted.

A method described in the example of FIG. 11 may be performed by the second wireless device 200 in FIG. 12. For example, at least one processor 202 of the second wireless device 200 in FIG. 12 may be configured to transmit, by the first network node to a terminal, through at least one transceiver 206, the first information related to at least one of the SSB of the first network node or the RS of the first network node; and transmit, by the first network node to a terminal, through at least one transceiver 206, an RAR responding to a random access preamble transmitted by a terminal to the second network node based on the first information. An RAR may include the second information related to a TA for the second network node. Furthermore, at least one memory 204 of the second wireless device 200 may store instructions for performing a method described in the example of FIG. 11 or examples described below when executed by at least one processor 202.

Hereinafter, various examples of an operation method for a macro cell and a UL Rx point and a method for a terminal to obtain a TA for a UL Rx point according to the present disclosure are described.

Embodiment 1

This embodiment relates to the operations of a macro cell (e.g., the first network node) and a UL Rx point (e.g., the second network node) and the operation method of a terminal.

A UL Rx point between a base station and a terminal may be run or operated based on at least one of the embodiments 1-1 to 1-4 below.

Embodiment 1-1

A different frequency domain resource and/or time domain resource may be allocated to a macro cell and a UL Rx point.

Embodiment 1-1-1

A base station may allocate a macro cell uplink and a UL Rx point uplink to a different frequency resource.

For example, a base station may configure a macro cell uplink and a UL Rx point uplink for the same UL BWP and allocate them to an independent (or different) frequency resource within a corresponding UL BWP. In the following description, being independent or separate refers to being distinct from each other, but being able to be the same or different.

Alternatively, a base station may configure a macro cell uplink and a UL Rx point uplink for a different UL BWP. In other words, power control, a timing advance, an uplink beam-related parameter/resource, etc. may be configured independently (or differently) for a different UL BWP.

Additionally or alternatively, a base station may utilize a specific supplemental UL (SUL) carrier for a UL Rx point uplink.

Accordingly, power control, a timing advance, an uplink beam-related parameter/resource, etc. may be separately configured/managed for uplink transmission to a UL Rx point whose location is physically different from a macro cell.

Embodiment 1-1-2

A base station may allocate a macro cell uplink and a UL Rx point uplink to a different time resource.

For example, for the pattern of a downlink/uplink/flexible slot configuration configured through a higher layer signal TDD-UL-DL-ConfigCommon or/and TDD-UL-DL-ConfigDedicated, information representing that among the uplink slots (and/or flexible slots), specific slots are utilized for a macro cell and the remaining slots are utilized for a UL Rx point may be delivered to a terminal through a higher layer signal (e.g., RRC or an MAC CE). TDD-UL-DL-ConfigCommon or/and TDD-UL-DL-ConfigDedicated may be utilized to deliver this information.

Accordingly, according to which time resource a base station allocates to an uplink resource to which target (i.e., according to whether an uplink resource is allocated to a macro cell or a UL Rx point), a terminal may perform uplink transmission based on different power control, timing advance, uplink beam-related parameter, etc. for a distinct uplink resource.

Embodiment 1-2

In configuring each UL channel/signal (e.g., including a PRACH, a PUCCH, a PUSCH and/or an SRS), a base station may separately configure a UL channel/signal for a macro cell and a UL channel/signal for a UL Rx point or may independently (or differently) configure a parameter related to {power control, timing advance, uplink beam} for each UL channel/signal.

For example, this embodiment may also be applied by assuming that the above-described embodiment 1-1 is not applied (i.e., that the same frequency/time domain resource is used for a macro cell and a UL Rx point).

Embodiment 1-2-1

A UL channel/signal (e.g., the resource/resource set of a UL channel/signal) for a macro cell and a UL channel/signal (e.g., the resource/resource set of a UL channel/signal) for a UL Rx point may be configured separately.

For example, a PUCCH resource for a macro cell and a PUCCH resource for a UL Rx point may be configured separately.

Additionally or alternatively, a codebook-based (CB)/non-codebook-based (NCB) SRS resource set for a macro cell and a CB/NCB SRS resource set for a UL Rx point may be configured separately. Accordingly, PUSCH transmission scheduling for a macro cell and PUSCH transmission scheduling for a UL Rx point may be distinguished through the distinction of an SRS resource indicator (SRI) field and/or the codepoint of an SRI field within DCI.

Additionally or alternatively, an SRS resource/an SRS resource set may be configured for each target (e.g., a macro cell and a UL Rx point), and accordingly, PUSCH transmission for a macro cell and PUSCH transmission for a UL Rx point may be distinguished.

Additionally or alternatively, a configured grant (CG) PUSCH resource may be configured for each (e.g., a macro cell and a UL Rx point), and accordingly, CG PUSCH transmission for a macro cell and CG PUSCH transmission scheduling for a UL Rx point may be distinguished.

Additionally or alternatively, a PRACH resource for a macro cell and a PRACH resource for a UL Rx point may be configured independently (or differently).

Embodiment 1-2-2

A UL channel/signal-related parameter (e.g., power control (PC), a timing advance (TA), an uplink beam-related parameter) for a macro cell and a UL channel/signal-related parameter (e.g., PC, a TA, an uplink beam-related parameter) for a UL Rx point may be configured independently (or differently). In other words, for a resource for the same UL channel/signal, a PC/TA/beam-related parameter value for a macro cell and a PC/TA/beam-related parameter value for a UL Rx point may be configured differently.

For example, for the same PUCCH resource, a plurality of (e.g., two) PC/TA/beam-related parameters may be configured/indicated for a macro cell and a UL Rx point. In other words, a terminal may utilize a specific parameter among a plurality of uplink transmission parameters according to whether a transmission target is a macro cell or a UL Rx point. Additionally or alternatively, when a plurality of corresponding transmission parameters are configured/indicated by a base station to simultaneously transmit a configured/indicated resource to a macro cell and a UL Rx point, a terminal may utilize each transmission parameter to simultaneously transmit a corresponding resource to a macro cell and a UL Rx point.

Embodiment 1-3

A base station may configure a macro cell and a UL Rx point to be associated with a different CORESET pool index. Accordingly, since PC/TA/a beam-related parameter/resource, etc. associated with the first CORESET pool index are distinct from PC/TA/a beam-related parameter/resource, etc. associated with the second CORESET pool index, a transmission parameter may be configured/applied independently (or differently) for each target (i.e., a macro cell and a UL Rx point). For example, power control, a timing advance and an uplink beam-related parameter/resource may be separately configured/managed (for each CORESET pool index) for uplink transmission to a UL Rx point whose location is physically different from that of a macro cell.

For example, this embodiment may also be applied when an uplink for a macro cell and an uplink for a UL Rx point are allocated within the same UL BWP.

Embodiment 1-3-1

When a macro cell and a UL Rx point are configured to be associated with a different CORESET pool index, a terminal may perform only uplink transmission for a CORESET pool index associated with a UL Rx point.

For example, in an M-DCI-based M-TRP operation, only uplink transmission may be configured/indicated for a specific CORESET pool index. In this case, similar to two CB/NCB SRS resource set configurations in an M-TRP simultaneous transmission across multi-panel (STxMP) PUSCH transmission method, a CB/NCB SRS resource set for a macro cell and a CB/NCB SRS resource set for a UL Rx point may be configured separately (i.e., two distinct CB/NCB SRS resource sets may be configured for a terminal). Accordingly, a one-to-one association may exist between a CB/NCB SRS resource set for a macro cell and a specific CORESET pool index (e.g., the first CORESET pool index), and a one-to-one association may exist between a CB/NCB SRS resource set for a UL Rx point and another specific CORESET pool index (e.g., the second CORESET pool index).

In UL grant DCI during PUSCH scheduling, the target of uplink transmission (i.e., a macro cell or a UL Rx point) may be different according to whether an SRI indication related to which SRS resource set of two SRS resource sets is included. Accordingly, power control, a timing advance and an uplink beam-related parameter for uplink transmission may be applied differently for each target. In addition, when all SRIs (i.e., two SRIs) related to two SRS resource sets are indicated by utilizing a plurality of SRI indications through UL grant DCI and are configured/indicated by a base station to transmit a PUSCH simultaneously for a macro cell and a UL Rx point, a terminal may utilize each transmission parameter to simultaneously transmit a corresponding PUSCH to a macro cell and a UL Rx point.

Even for a PUCCH/an SRS, power control, a timing advance and an uplink beam-related parameter for a macro cell and/or a UL Rx point may be applied during the uplink transmission of a terminal according to at least one CORESET pool index (or at least one CB/NCB SRS resource set) to which a corresponding resource is related.

Embodiment 1-3-2

Similar to a PUSCH repetition method in an S-DCI-based M-TRP operation, (assuming that as described above, an uplink for a macro cell and an uplink for a UL Rx point are allocated within the same UL BWP), a CB/NCB SRS resource set for a macro cell and a CB/NCB SRS resource set for a UL Rx point may be configured separately without configuring a CORESET pool index. In this case, since two SRS resource sets have a one-to-one correspondence with a specific PUSCH transmission occasion (TO) group during PUSCH repetitive transmission, a terminal may perform PUSCH repetitive transmission for a macro cell and a UL Rx point as a base station schedules PUSCH repetitive transmission.

For example, PUSCH repetitive transmission for a macro cell may be performed in the first TO group, and PUSCH repetitive transmission for a UL Rx point may be performed in the second TO group. Here, transmission for an S-TRP (i.e., one of a macro cell or a UL Rx point) may be performed according to an SRI indication (or by an SRS resource set indicator field). For each TO group, a terminal may utilize a specific parameter associated with a corresponding target/SRS resource set among uplink transmission parameters (e.g., power control, a timing advance, an uplink beam-related parameter) related to a plurality of SRS resource sets according to whether a transmission target is a macro cell or a UL Rx point (or according to whether an SRI or a TPMI related to which SRS resource set is indicated).

Even for a PUCCH/an SRS, macro cell-specific or UL Rx point-specific power control, timing advance and uplink beam-related parameters may be applied during terminal uplink transmission according to which CB/NCB SRS resource set to which a corresponding resource is related.

Embodiment 1-4

A base station may configure a macro cell and a UL Rx point to be associated with a different joint and/or separate (UL) TCI state in a unified TCI framework. In this case, since information related to power control, a timing advance and a transmission beam is configured for a different joint/separate (UL) TCI state, respectively, whether a terminal's uplink transmission target is a macro cell or a UL Rx point may be determined according to a joint/separate (UL) TCI state utilized by a base station for uplink transmission.

For example, the extension of a unified TCI state for an M-TRP operation may be supported by extending the number of reception and transmission common beams to two for TRP-specific common beam management, and these two indicated TCI states (i.e., a joint TCI state and/or a separate UL TCI state) may be applied to uplink transmission for a macro cell and a UL Rx point.

Embodiment 2

This embodiment relates to a method in which a terminal obtains a TA for a UL Rx point.

In the examples of Embodiment 1 described above, a HARQ process ID may be defined/configured for a macro cell and a UL Rx point, respectively. In this way, power control, a TA and transmission beam-related parameters for uplink transmission may be applied to a HARQ process ID for a macro cell and a HARQ process ID for a UL Rx point, respectively. Even when it is assumed that a macro cell and a UL Rx point are connected through an ideal backhaul, considering that it is difficult to implement actually due to the complexity of soft combining an uplink signal received from a terminal by a macro cell and a UL Rx point in a decoding fronthaul, it may be appropriate to distinguish a transmission-related parameter through a separate HARQ process for each target.

As described above, since a UL Rx point may perform only UL reception without a DL Tx chain to reduce a base station installation cost, it has a constraint that it may not perform DL RS transmission to a terminal. As a result, a terminal may not measure/determine a DL slot boundary (or a reference point) for TA application during uplink transmission for a UL Rx point, and since there is no SSB transmission from a UL Rx point, there is no reference information for random access preamble selection and/or random access preamble transmission timing during RACH/PRACH transmission for obtaining a TA, there is uncertainty in a terminal operation.

Hereinafter, various examples of the present disclosure related to obtaining timing advance information for a UL Rx point for the uplink transmission of a terminal for a UL Rx point will be described.

Embodiment 2-1

This embodiment relates to the definition or configuration of a reference point for applying a corresponding timing advance (TA) value (e.g., the value of an N_TA and/or N_TA,offset parameter) after a terminal obtains a TA for a UL Rx point. A reference point may correspond to the boundary of a downlink radio frame for applying a TA value.

Embodiment 2-1-1

A terminal may expect that the reference point of a UL Rx point is the same as the DL reference point of a macro cell. Additionally or alternatively, a constraint that the DL reference point of a macro cell and the reference point of a UL Rx point are the same may be applied in the arrangement/implementation of a base station. In this case, the reference point definition for the specific cell (e.g., SpCell/SCell) of a terminal may be applied to a UL Rx point as follows.

For terminal transmission timing, a terminal may have a capability to follow the frame timing change of a reference cell when transmitting a PUSCH on a configured grant (CG) resource for small data transmission (SDT) in an RRC connected state or in an RRC inactive state. As described above, uplink frame transmission may be performed at a time point $(N_{Tn} + N_{TA,offset})^*T_c$ before the reception time point of the first detected path (on time) of a corresponding downlink frame from a reference cell. For the serving cell(s) of a PTAG, a terminal may use an SpCell as a reference cell for deriving transmission timing for the cells of a PTAG. For the serving cell(s) of an STAG, a terminal may use any one of the activated SCells as a reference cell for deriving transmission timing for the cells of an STAG. A terminal's initial transmission timing accuracy and gradual timing adjustment requirements may be defined.

Embodiment 2-1-2

To define the reference point of a UL Rx point, an offset value between the reference point of a UL Rx point and the DL reference point of a macro cell may be configured/indicated from a base station to a terminal. It may also be applied when there is a reference point difference between a macro cell and a UL Rx point, or an offset value of 0 may be configured/indicated even when there is no difference. When a plurality of UL Rx points are related to one macro cell, an offset value may be configured/indicated separately (or differently) for each of a plurality of UL Rx points.

For example, an offset value may be expressed by the $N_{TA}$ value of a TA command described above (here, indicated by index values of $T_A$=0, 1, 2, ..., 3846) or may be expressed by (a multiple of) $T_A$=0, 1, 2, ..., 63 in a relative TA command described above.

As another example, an offset value may be predefined as a specific value (e.g., a positive/negative real number), and one of the predefined values may be configured/indicated to a terminal as an offset value related to the reference point of a UL Rx point.

For a term of reference point, since a DL radio frame is not present/defined at a UL Rx point, a reference point for a UL Rx point may also be defined as a UL reference point or a virtual point or a virtual reference point instead of a term of DL reference point.

Embodiment 2-1-3

To define the reference point of a UL Rx point, an $N_{TA,offset}$ value for a UL Rx point may be defined/configured. An $N_{TA,offset}$ parameter for a UL Rx point may be defined/configured as a parameter distinct from an $N_{TA,offset}$ parameter for a macro cell. It may also be applied when there is a reference point difference between a macro cell and a UL Rx point, or the same $N_{TA,offset}$ value as a macro cell may be defined/configured even when there is no difference. When a plurality of UL Rx points are related to one macro cell, an $N_{TA,offset}$ parameter value may be configured/indicated separately (or differently) for each of a plurality of UL Rx points.

An (i.e., existing) $N_{TA,offset}$ parameter for a macro cell corresponds to a TDD/FDD band-specific value, and is a parameter that is predefined or signaled to a terminal by a base station configuration. An $N_{TA,offset}$ parameter for a UL Rx point distinct from this may be configured for a terminal by a base station and/or may be predefined.

In the above-described embodiment 2-1, a base station may signal to a terminal which of embodiments 2-1-1, 2-1-2 and 2-1-3 is applied according to whether there is a reference point difference between a macro cell and a UL Rx point. For example, in embodiments 2-1-2 and 2-1-3, a base station may signal to a terminal information about an offset value for (a plurality of) UL Rx points or a time point at which an $N_{TA,offset}$ value is applied.

Embodiment 2-2

This embodiment relates to a method for obtaining a TA for the UL Rx point of a terminal and a method for indicating/updating a TA for a UL Rx point. In examples below, to manage a TA value for a UL Rx point, a TA value for a UL Rx point may be managed as a TAG different from a macro cell or may be managed through a predetermined offset value for the TA value of a macro cell.

Embodiment 2-2-1

Similar to Embodiment 2-1, when a reference point for uplink transmission for a UL Rx point is defined/configured, a terminal may transmit uplink transmission for a configured/indicated UL Rx point based on a corresponding reference point. In this case, a base station may not perform a separate operation for obtaining the TA of a terminal. Thereafter, a base station may provide a TA command for a UL Rx point by utilizing an absolute/relative TA command (e.g., an MAC CE) to refine a TA value for the UL Rx point of a terminal.

Embodiment 2-2-2

A terminal may transmit an RACH/a PRACH to a UL Rx point. For example, an RACH/a PRACH may be transmitted to a UL Rx point based on a PDCCH order. A PDCCH order may be provided to a terminal from a macro cell. After receiving an RACH/a PRACH at a UL Rx point, a base station may indicate a TA value for a UL Rx point to a terminal through an RAR (e.g., an absolute TA command field included in an RAR) transmitted from a macro cell to a terminal. In other words, an RAR responding to an RACH/a PRACH transmitted to a UL Rx point may be received from a macro cell. For example, an RAR may be received through a CORESET associated with a type-1 common search space (CSS).

In this regard, applying a PL (pathloss) offset to a PRACH transmitted to a UL Rx point based on a PDCCH order may be supported. A determination on DL reference timing for PRACH transmission to a UL Rx point based on a PDCCH order may be based on a previously defined DL RS. For example, a DL RS such as the SSB and/or CSI-RS of a macro cell may be utilized to determine DL reference timing for a UL Rx point or may be applied as a PL reference RS. In addition, for the indication of a PL offset for PRACH transmission based on a PDCCH order, a PL offset associated with a joint/UL TCI state indicated for a UL Rx point in a unified TCI framework may be applied to PDCCH order-based PRACH transmission.

Specifically, since a UL Rx point does not transmit an SSB, it is required to solve a problem of difficulty in power control and transmission beam information configuration for RACH/PRACH transmission. To this end, i) by indicating the specific SSB of a macro cell to a terminal through a PDCCH order, a base station may cause a terminal to utilize an RACH/PRACH resource related to a corresponding SSB, and may cause a terminal to apply a corresponding SSB as a transmission beam RS and/or a PL RS (or a PL reference RS) and transmit an RACH/a PRACH based thereon. Alternatively, ii) by indicating the specific SSB of a macro cell to a terminal through a PDCCH order, a base station may cause a terminal to utilize an RACH/PRACH resource related to a corresponding SSB, apply a transmission beam RS and/or a PL RS determined in a different manner instead of the SSB of a macro cell and cause a terminal to transmit an RACH/a PRACH based thereon. Alternatively, iii) it may cause a terminal to apply a transmission beam RS and/or a PL RS determined in a different manner without a base station's indication for an SSB. For example, for an RACH/PRACH transmission beam determined in a different manner, a beam management SRS transmitted by a terminal in advance may be utilized as the reference RS of an RACH/PRACH transmission beam.

Various examples of transmission beam/PL RS application for RACH/PRACH transmission (e.g., i), ii) and/or iii) described above) may be selectively applied (e.g., switched/controlled) by a base station. For example, when a base station transmits to a terminal a PDCCH order triggering RACH/PRACH transmission for a UL Rx point, information indicating whether a terminal is configured to transmit an RACH/a PRACH based on a terminal's reception beam for the SSB of a macro cell (e.g., example i) described above) or whether a terminal is configured to transmit an RACH/a PRACH based on a beam direction different from a terminal's reception beam for the SSB of a macro cell (e.g., example ii) or iii) described above) may be included in DCI corresponding to a PDCCH order.

After transmitting a random access preamble through an RACH/a PRACH for a UL Rx point, a QCL assumption applied to the reception of an RAR responding to a random access preamble (i.e., a PDCCH/DCI scheduling a PDSCH carrying an RAR and/or a PDSCH carrying an RAR) may be applied as in the following examples. For example, when RACH/PRACH transmission is performed based on the SSB of a macro cell according to example i) described above, the indicated SSB of a macro cell may be utilized as a QCL RS for RAR reception. Alternatively, when RACH/PRACH transmission is performed based on a transmission beam RS and/or a PL RS determined in a different manner according to example ii) or iii) described above, a corresponding transmission beam RS and/or PL RS may be utilized as a QCL RS for RAR reception. Additionally or alternatively, QCL information (or a TCI state) configured for a CORESET associated with a type-1 CSS used for RAR reception (of a macro cell) as described above may be utilized as a QCL RS for RAR reception.

In receiving an RAR scheduling PDCCH/DCI after transmitting an RACH/a PRACH for a cell supporting both a DL and a UL, based on an RACH occasion (RO), an RA-RNTI applied to the monitoring of a corresponding PDCCH/DCI may be computed, and a PDCCH/DCI may be received based on corresponding identification information. An RA-RNTI for monitoring an RAR scheduling PDCCH/DCI responding to an RACH/a PRACH/a random access preamble transmitted to a UL Rx point may be computed according to the following examples. For example, when RACH/PRACH transmission is performed/triggered based on the specific SSB of a macro cell as in example i) or ii) described above, an RA-RNTI may be computed based on the information of an RO based on the specific SSB of a corresponding macro cell (e.g., a symbol index, a slot index, a frequency domain index) and an RAR scheduling PDCCH/DCI may be received based on this.

Alternatively, when RACH/PRACH transmission that is not based on a specific SSB is performed as in example iii) described above, a separate RA-RNTI may be computed by a terminal and an RAR scheduling PDCCH/DCI may be received based on this.

An RA-RNTI for a 4-step RACH procedure may be computed as follows. An RA-RNTI associated with a PRACH occasion in which a random access preamble is transmitted may be computed according to the equation RA-RNTI = 1 + $s\_id + 14 \times t\_id + 14 \times 80 \times f\_id + 14 \times 80 \times 8 \times ul\_carrier\_id$. Here, $s\_id$ is the index of the first OFDM symbol of a PRACH occasion ($0 \leq s\_id < 14$). $t\_id$ is the index of the first slot of a PRACH occasion in a system frame ($0 \leq t\_id < 80$), wherein subcarrier spacing for determining $t\_id$ may be based on subcarrier spacing configuration indexes $\mu(=0, 1, 2, 3)$ and $\mu(=5, 6)$. For example, $t\_id$ may correspond to the index of a slot based on 120kHz subcarrier spacing in a system frame including a PRACH occasion. $f\_id$ is the index of a PRACH occasion in a frequency domain ($0 \leq f\_id < 8$). $ul\_carrier\_id$ is the index of a UL carrier used for random access preamble transmission, and its value may be given as 0 for a normal uplink (NUL) carrier and 1 for a supplementary uplink (SUL) carrier. In a 2-step RACH procedure, an MSGB-RNTI associated with a PRACH occasion in which a random access preamble is transmitted may be computed according to the equation MSGB-RNTI = 1 + $s\_id + 14 \times t\_id + 14 \times 80 \times f\_id + 14 \times 80 \times 8 \times ul\_carrier\_id + 14 \times 80 \times 8 \times 2$.

The examples of Embodiment 2-2 may also be applied when a terminal transmits an RACH/a PRACH to perform initial access. For example, RACH/PRACH information related to a UL Rx point (e.g., a higher-layer information element RACH-config including information about an RACH resource such as an SSB index, an RACH preamble, an RACH occasion, etc.) may be included in a specific system information block (SIB). Based on information included in a corresponding SIB, a terminal may transmit an RACH/a PRACH for a UL Rx point when performing an initial access procedure.

Embodiment 2-2-3

An SRS resource set and/or an SRS resource for an RACH-like SRS may be configured separately for a terminal. Based on the reception of an RACH-like SRS transmitted by a terminal, a base station may provide a terminal with a TA command for a UL Rx point by utilizing an absolute/relative TA command (e.g., an MAC CE) to refine a TA value for the UL Rx point of a terminal. A specific SRS resource for the above-described RACH-like SRS may be composed of time/-frequency domain resources greater than or equal to N symbols and greater than or equal to an X kHz bandwidth (here, N and X are a positive natural number, respectively). Accordingly, a base station may solve a problem that obtaining a TA is inaccurate due to a lack of granularity only with the existing SRS reception.

General Device to which the Present Disclosure may be applied

FIG. 12 illustrates a block diagram of a wireless communication device according to an embodiment of the present disclosure.

In reference to FIG. 12, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device XXX, YYY of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method, comprising:

receiving, by a terminal from a first network node, first information related to at least one of a synchronization signal/physical broadcast channel block (SSB) of the first network node or a reference signal (RS) of the first network node;

transmitting, by the terminal to a second network node, a random access preamble based on the first information; and

receiving, by the terminal from the first network node, a random access response (RAR) responding to the random access preamble,

wherein the RAR includes second information related to a timing advance (TA) for the second network node.

2. The method of claim 1, wherein:
a downlink reference timing for the random access preamble transmission is based on at least one of the SSB or the RS of the first information.

3. The method of claim 1, wherein:
a pathloss offset for the random access preamble transmission is based on at least one of the SSB or the RS of the first information.

4. The method of claim 1, wherein:
the first information is included in a physical downlink control channel order (PDCCH order) from the first network node to the terminal.

5. The method of claim 1, wherein:
a quasi co-location (QCL) assumption for at least one of a physical downlink shared channel (PDSCH) carrying the RAR or a PDCCH scheduling the PDSCH is based on the SSB of the first information.

6. The method of claim 1, wherein:

a quasi co-location (QCL) assumption for at least one of a PDSCH carrying the RAR or a PDCCH scheduling the PDSCH is based on at least one of:

the RS of the first information, or
QCL information configured for a control resource set (CORESET) related to a type-1 common search space (CSS) for the first network node.

7. The method of claim 1, wherein:

a random access-radio network temporary identifier (RA-RNTI) related to monitoring of downlink control information (DCI) including scheduling information for the PDSCH or monitoring of a PDCCH scheduling a PDSCH carrying the RAR is computed based on at least one of a symbol index, a slot index, or a frequency domain index of a physical random access channel (PRACH) occasion based on the SSB of the first information.

8. The method of claim 1, wherein:
based on a first timing advance group (TAG) related to the first network node and a second TAG related to the second network node being configured for the terminal, the second information included in the RAR is applied to the second TAG.

9. The method of claim 8, wherein:
based on a first transmission configuration indicator (TCI) state for the first TAG and a second TCI state for the second TAG being configured or indicated for the terminal, uplink transmission from the terminal to the second network node is performed based on the second TCI state.

10. The method of claim 9, wherein:
a pathloss offset associated with the second TCI state is applied to the random access preamble transmission.

11. The method of claim 1, wherein:
before receiving the first information, configuration information for at least one of at least one SSB of the first network node or at least one reference signal (RS) of the first network node is provided for the terminal.

12. The method of claim 1, wherein:

> the first network node corresponds to a macro cell, and
> the second network node corresponds to an uplink reception point.

13. The method of claim 12, wherein:
the uplink reception point supports uplink reception from at least one terminal including the terminal, and does not support downlink transmission to the at least one terminal.

14. An apparatus, comprising:

> at least one transceiver; and
> at least one processor connected to the at least one transceiver,
> wherein the at least one processor is configured to:

>> receive, through the at least one transceiver, by a terminal from a first network node, first information related to at least one of a synchronization signal/physical broadcast channel block (SSB) of the first network node or a reference signal (RS) of the first network node;
>> transmit, through the at least one transceiver, by the terminal to a second network node, a random access preamble based on the first information; and
>> receive, through the at least one transceiver, by the terminal from the first network node, a random access response (RAR) responding to the random access preamble,

> wherein the RAR includes second information related to a timing advance (TA) for the second network node.

15. A method, comprising:

> transmitting, by a first network node to a terminal, first information related to at least one of a synchronization signal/physical broadcast channel block (SSB) of the first network node or a reference signal (RS) of the first network node; and
> transmitting, by the first network node to the terminal, a random access response (RAR) responding to a random access preamble transmitted by the terminal to a second network node based on the first information,
> wherein the RAR includes second information related to a timing advance (TA) for the second network node.

16. An apparatus, comprising:

> at least one transceiver; and
> at least one processor connected to the at least one transceiver,
> wherein the at least one processor is configured to:

>> transmit, through the at least one transceiver, by a first network node to a terminal, first information related to at least one of a synchronization signal/physical broadcast channel block (SSB) of the first network node or a reference signal (RS) of the first network node; and
>> transmit, through the at least one transceiver, by the first network node to the terminal, a random access response (RAR) responding to a random access preamble transmitted by the terminal to a second network node based on the first information,

> wherein the RAR includes second information related to a timing advance (TA) for the second network node.

17. A processing apparatus, comprising:

> at least one processor; and
> at least one computer memory operably connected to the at least one processor, and based on being executed by the at least one processor, storing instructions for performing a method according to any one of Claim 1 to Claim 11.

18. At least one non-transitory computer readable medium storing at least one instruction that controls to perform a method according to any one of Claim 1 to Claim 11 by being executed by at least one processor.

# FIG.1

# FIG.2

Radio Frame 10ms

Subframe 1ms

} Fixed Size

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

} Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

FIG.6

## FIG.7

| Downlink frame i |
|---|

| Uplink frame i |
|---|

$(N_{TA} + N_{TA,offset})T_C$

## FIG.8

| R | Timing advance command | | Oct 1 |
|---|---|---|---|
| Timing advance command | | UL grant | Oct 2 |
| UL grant | | | Oct 3 |
| UL grant | | | Oct 4 |
| UL grant | | | Oct 5 |
| Temporary C-RNTI | | | Oct 6 |
| Temporary C-RNTI | | | Oct 7 |

## FIG.9

| TAG ID | Timing advance command | Oct 1 |
|---|---|---|

## FIG.10

Receive, from first network node, first information
related to SSB of first network node and/or
RS of first network node — S1010

Transmit random access preamble to
second network node based on first information — S1020

Receive RAR responding to
random access preamble from first network node — S1030

## FIG.11

Transmit, to terminal, first information
related to SSB of first network node and/or
RS of first network node — S1110

Transmit, to terminal, RAR responding to
random access preamble transmitted by terminal
to second network node based on first information — S1120

EP 4 783 686 A1

# FIG.12

## INTERNATIONAL SEARCH REPORT

| International application No. |
| --- |
| **PCT/KR2024/096218** |

| A. | CLASSIFICATION OF SUBJECT MATTER |
| --- | --- |

**H04W 56/00**(2009.01)i; **H04W 72/231**(2023.01)i; **H04W 74/00**(2009.01)i; **H04W 48/10**(2009.01)i; **H04J 11/00**(2006.01)i; **H04W 72/1268**(2023.01)i

According to International Patent Classification (IPC) or to both national classification and IPC

| B. | FIELDS SEARCHED |
| --- | --- |

Minimum documentation searched (classification system followed by classification symbols)

H04W 56/00(2009.01); H04W 72/12(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SSB, 랜덤 액세스(random access), 프리엠블(preamble), 응답(RAR), 타이밍 어드밴스(Timing Advance)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2022-0346137 A1 (QUALCOMM INCORPORATED) 27 October 2022 (2022-10-27) See paragraphs [0036]-[0037], [0092]-[0098] and [0101]-[0102]. | 1-2,11-18 |
| Y | | 3-10 |
| Y | ZTE. TA enhancement for multi-DCI. R1-2302417, 3GPP TSG RAN WG1 Meeting #112bis-e. 07 April 2023. See pages 1-11. | 3-10 |
| Y | US 2022-0210806 A1 (OFINNO, LLC) 30 June 2022 (2022-06-30) See paragraphs [0172]-[0174]. | 7 |
| A | US 2023-0020898 A1 (QUALCOMM INCORPORATED) 19 January 2023 (2023-01-19) See paragraphs [0035] and [0094]-[0096] and figure 5. | 1-18 |
| A | NTT DOCOMO, INC. Discussion on UL dense deployment. R1-2103566, 3GPP TSG RAN WG1 #104b-e. 06 April 2021. See pages 1-4. | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 December 2024** | **19 December 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/096218**

| Patent document cited in search report | | | Publication date (day/month/year) | Patent family member(s) | | | Publication date (day/month/year) |
|---|---|---|---|---|---|---|---|
| US | 2022-0346137 | A1 | 27 October 2022 | BR | 112023021013 | A2 | 19 December 2023 |
| | | | | CN | 117136621 | A | 28 November 2023 |
| | | | | EP | 4327613 | A1 | 28 February 2024 |
| | | | | KR | 10-2023-0172487 | A | 22 December 2023 |
| | | | | US | 11864225 | B2 | 02 January 2024 |
| | | | | WO | 2022-225609 | A1 | 27 October 2022 |
| US | 2022-0210806 | A1 | 30 June 2022 | None | | | |
| US | 2023-0020898 | A1 | 19 January 2023 | CN | 117678286 | A | 08 March 2024 |
| | | | | EP | 4371347 | A1 | 22 May 2024 |
| | | | | US | 11589327 | B2 | 21 February 2023 |
| | | | | WO | 2023-287521 | A1 | 19 January 2023 |

Form PCT/ISA/210 (patent family annex) (July 2022)